Europäisches Patentamt

(19) European Patent Office

Office européen des brevets

(11) Publication number : **0 343 748 B1**

(12) **EUROPEAN PATENT SPECIFICATION**

(45) Date of publication of patent specification :
**29.01.92 Bulletin 92/05**

(21) Application number : **89201318.6**

(22) Date of filing : **22.05.89**

(51) Int. Cl.⁵ : **A23G 3/04**, A23G 3/02,
F28F 9/26, F28D 1/053

(54) **Device for heating a substance in throughflow.**

(30) Priority : **24.05.88 NL 8801335**

(43) Date of publication of application :
**29.11.89 Bulletin 89/48**

(45) Publication of the grant of the patent :
**29.01.92 Bulletin 92/05**

(84) Designated Contracting States :
**DE FR GB NL**

(56) References cited :
**EP-A- 0 220 398**
**NL-A- 8 600 655**
**US-A- 3 543 696**

(73) Proprietor : **VOMATEC B.V.**
**Veersedijk 161**
**NL-3341 LL Hendrik Ido Ambacht (NL)**

(72) Inventor : **Meijburg, Cornelis**
**De Raadtweg 29**
**NL-3341 SB Hendrik Ido Ambacht (NL)**

(74) Representative : **de Bruijn, Leendert C. et al**
**Nederlandsch Octrooibureau**
**Scheveningseweg 82 P.O. Box 29720**
**NL-2502 LS 's-Gravenhage (NL)**

Jouve, 18, rue Saint-Denis, 75001 PARIS

## Description

The invention relates to a device for heating a substance or a mixture of substances in throughflow, in particular for cooking a raw material for the preparation of a confectionery or such sweets, comprising a closed housing which is provided with at least one infeed and one discharge for a heating medium, for example steam, and a pipe extending through the inside of said housing and formed by a number of straight pipe lengths which extend, running essentially parallel to each other, through the housing between two plate-shaped elements which are each provided with a number of apertures in which the ends of the pipe lengths are mounted, a connection being formed between pairs of openings at the outward-facing sides of said plate-shaped elements, in such a way that the pipe lengths are connected to each other to form a continuous piping extending forward and backward through the housing, said piping having an infeed and a discharge end running beyond the end of the housing. Such a device is known from Applicants' earlier Dutch Patent Application 8600655 (DE-U-8626292).

The improvement in the known device is that the piping extending through the housing is formed by a number of straight pipe lengths running essentially parallel to each other between two plate-shaped elements which are each provided with a number of apertures in which the ends of the pipe lengths are mounted, a connection being formed between pairs of openings at the outward-facing sides of said plate-shaped elements, in such a way that the pipe lengths are connected to each other to form a continuous piping extending forward and backward through the housing.

This improvement is utilized further according to the invention in that in one or more of the above-mentioned connections an injection nozzle is disposed between a pair of apertures, for feeding an additional substance at a specific point into the piping extending through the housing.

In a device in which the connections between the pairs of apertures are formed by channel-type recesses which are formed in the external face of the plate-shaped elements and extend between two apertures, and the open sides of which are covered by closing plates resting against the plates, the injection nozzle is advantageously disposed in one of the closing plates, and opens into one of the channel-type recesses covered by the closing plate.

In a device designed in this way additional substances can be added, essentially at any reversal point in the piping running through the housing, to the substance flowing through the piping, while if these additional substances are temperature-sensitive or mechanically fragile, the positioning of the injection nozzles can be selected in such a way that no burning of the added substances can occur and/or these substances are not exposed to any other destructive effect.

The invention is explained in greater detail with reference to the drawing, in which :

Fig. 1 shows in longitudinal section a device according to the invention ;

Fig. 2 shows a side view of the device ; and

Fig. 3 shows schematically how the device operates.

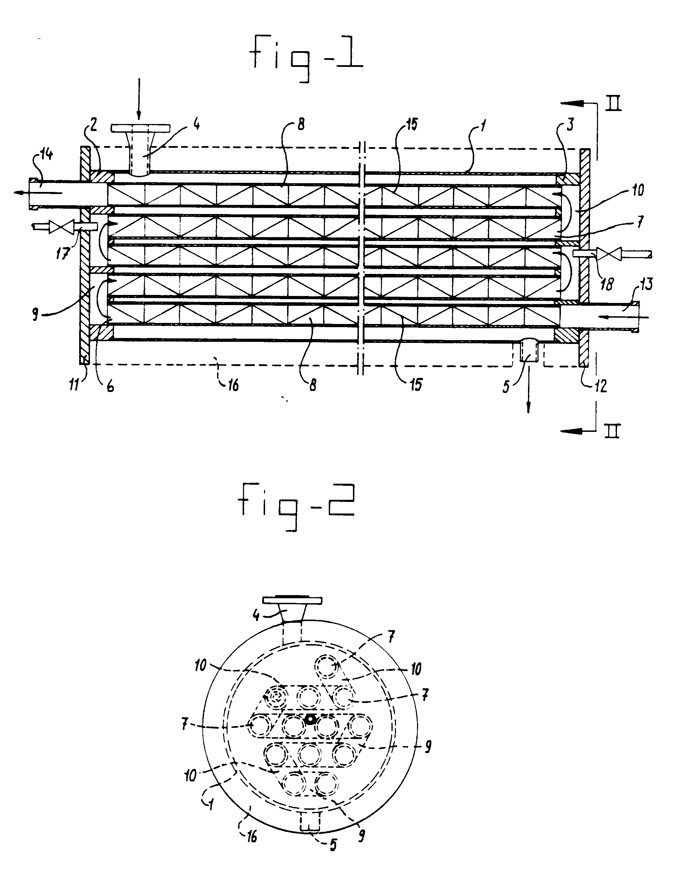

As shown in Figs. 1 and 2, the device comprises a housing formed by a cylindrical casing 1, which is closed at both ends by a plate 2, 3. The casing 1 is provided with an inlet 4 for feeding a heating medium, in particular steam, into the housing, and an outlet 5 for the discharge of said heating medium. The plates 2 and 3 are provided with a number of apertures 6, 7, in which the ends of the straight pipe lengths 8 are mounted. A number of recesses 9, 10, extending between two apertures 6, 7, are formed in the outward-facing end faces of the plates 2, 3, and the open sides of said recesses are covered by closing plates 11, 12, all this in such a way that the pipe lengths are connected to each other to form one pipe extending forward and backward through the housing 1, 2. One of the ends of a pipe length 8 is connected to an inlet 13 for the substance to be processed, extending beyond the end of the housing 1, 2, and one of the ends of another pipe length 8 is connected to an outlet 14 for the processed substance, extending beyond the end of the housing 1, 2.

Mixing elements, in particular static mixers 15, are provided in one or more of the pipe lengths 8.

A covering of an insulating material 16 is provided around the casing.

The closing plate 11 has fitted in it an injection nozzle 17, opening into a recess 9 which is formed in the plate 2, and by means of which two pipe lengths 8 are connected to each other there. A nozzle 18 is disposed in the same way in the closing plate 12.

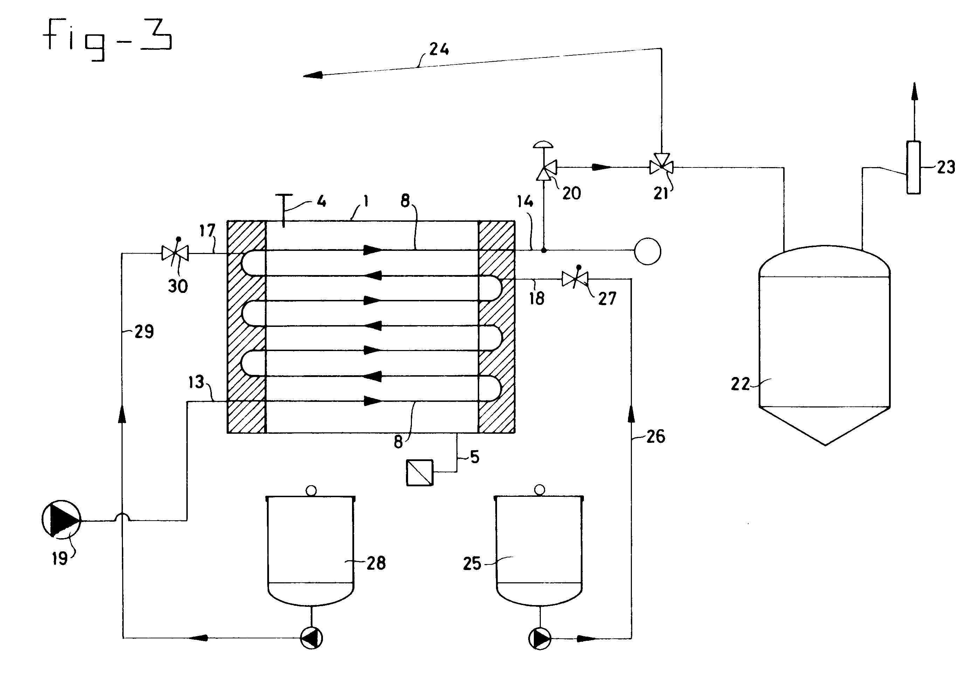

As shown in Fig. 3, when the device is in operation the starting material, for example a mixture of sugar, water and glucose, is fed by means of a pump 19 via the inlet 13 through the pipe formed inside the housing 1 by the pipe lengths 8, said pipe being surrounded by the heating medium, in particular the steam, which is fed into the housing through the inlet 4, while the spent, condensed steam is collected by means of the outlet 5. The heated or superheated mixture passes out of the device through the outlet 14 and is then taken by means of the pneumatically operated counterpressure valve 20 and the three-way valve 21 to the vapour separator 22, from which the vapour is discharged at 23. A return pipe 24 is connected to the three-way valve 21.

While the mixture of sugar, water and glucose is running through the pipe 8 running inside the housing 1, an additional substance is added to it by means of the injection nozzle 18, said additional substance having been pumped from a storage tank 25 through the pipe 26 containing the non-return valve 27. Another additive substance is injected into the mixture of sugar, water and glucose by means of the injection nozzle 17, this substance being pumped from the storage tank 28 through the pipe 29 containing the non-return valve 30.

For the preparation of, for example, caramel the mixture of sugar, water and glucose is heated to above 120°C while passing through the pipe, while a fat is added by means of the injection nozzle 17 and condensed milk is added by means of the injection nozzle 18, at such points that neither the fat nor the milk product can burn or stick, while the mixture coming out of the device at 14 is still of a homogeneous composition which can caramellize.

## Claims

1. Device for heating a substance or a mixture of substances in throughflow, in particular for cooking a raw material for the preparation of a confectionery or such sweets, comprising a closed housing which is provided with at least one infeed and one discharge for a heating medium, for example steam, and a piping extending through the inside of said housing and formed by a number of straight pipe lengths which extend, running essentially parallel to each other, through the housing between two plate-shaped elements which are each provided with a number of apertures in which the ends of the pipe lengths are mounted, a connection being formed between pairs of openings at the outward-facing sides of said plate-shaped elements, in such a way that the pipe lengths are connected to each other to form a continuous piping extending forward and backward through the housing, said piping having an infeed and a discharge end running beyond the end of the housing, characterized in that in one or more of the above-mentioned connections an injection nozzle is disposed between a pair of apertures, for feeding an additional substance at a specific point into the piping extending through the housing.

2. Device according to Claim 1, in which the connections between the pairs of apertures are formed by channel-type recesses which are formed in the external face of the plate-shaped elements and extend between two apertures, and the open sides of which are covered by closing plates resting against the plate-shaped elements, and in which the injection nozzle is disposed in one of the closing plates, and opens into one of the channel-type recesses therein.

## Patentansprüche

1. Vorrichtung zum Erhitzen einer Substanz oder einer Mischung von Substanzen im Durchfluß, insbesondere zum Kochen eines Rohmaterials für die Zubereitung von Konfekt oder anderer Süßwaren, mit einem geschlossenen Gehäuse, das mindestens eine Zuleitung und eine Ausgabeleitung für ein Heizmedium, z.B. Dampf, und eine Rohranordnung aufweist, die sich im Innern des Gehäuses erstreckt und von einer Anzahl gerader Rohrlängen gebildet wird ; die im wesentlichen parallel zueinander verlaufend, sich zwischen zwei plattenförmigen Elementen erstrecken, die jeweils eine Anzahl von Öffnungen aufweisen, in denen die Enden der Rohrlängen angeordnet sind, wobei eine Verbindung zwischen jeweils zwei Öffnungen an den außenliegenden Seiten der plattenförmigen Elemente derart vorgesehen ist, daß die Rohrlängen miteinander verbunden sind und eine durchgehende sich vorwärts und rückwärts durch das Gehäuse erstreckende Rohranordnung bilden, wobei diese Rohranordnung ein Zuleitungs- und ein Ableitungsende hat, das sich über das Ende des Gehäuses erstreckt, **dadurch gekennzeichnet**, daß in einer oder mehreren der zuvor genannten Verbindungen zwischen jeweils zwei Öffnungen eine Einspritzdüse angeordnet ist zum Zuführen einer zusätzlichen Substanz an einer bestimmten Stelle in der sich durch das Gehäuse erstreckenden Rohranordnung.

2. Vorrichtung nach Anspruch 1, wobei die Verbindungen zwischen jeweils zwei Öffnungen von kanalartigen Ausnehmungen gebildet werden, die in der Außenfläche der plattenförmigen Elemente ausgebildet sind und sich zwischen zwei Öffnungen erstrecken, und deren offene Seiten von Abschlußplatten abgedeckt sind, die an den plattenförmigen Elementen anliegen, und wobei die Einspritzdüse in einer der Abschlußplatten angeordnet ist, und in eine der darin angeordneten kanalförmigen Ausnehmungen mündet.

## Revendications

1. Dispositif pour chauffer une substance ou un mélange de substances le traversant en continu, en particulier pour cuire une matière de base pour la préparation d'une confiserie ou autres sucreries, comportant un corps fermé qui est pourvu d'au moins une entrée et une sortie pour un agent de chauffage, par exemple de la vapeur, et une tubulure s'étendant d'un bout à l'autre dudit corps et formée par plusieurs longueurs rectilignes de tubulure qui s'étendent, essentiellement parallèlement l'une à l'autre, d'un bout à l'autre du corps entre deux éléments en forme de plaque qui sont pourvus chacun d'un certain nombre d'ouvertures dans lesquelles sont montées les extrémités des longueurs de tubulure, une liaison étant formée entre des paires d'ouvertures ménagées dans les côtés dirigés vers l'extérieur des dits éléments en forme de plaque, d'une manière telle que les longueurs de tubulure sont reliées l'une à l'autre afin de former une tuyauterie continue s'étendant vers l'avant et vers l'arrière d'un bout à l'autre du corps, la dite tuyauterie ayant une entrée et une extrémité de sortie s'étendant au-delà de l'extrémité du corps, caractérisé en ce que, dans une ou plusieurs des liaisons mentionnées ci-dessus, est disposée une buse d'injection entre une paire d'ouvertures afin de délivrer une substance additionnelle en un point spécifique dans la tuyauterie s'étendant d'un bout à l'autre du corps.

2. Dispositif selon la revendication 1, dans lequel les liaisons entre les paires d'ouvertures sont formées par des évidements du type canal qui sont formés dans la face externe des éléments en forme de plaque et s'étendent entre deux ouvertures, et dont les côtés ouverts sont fermés par des plaques de fermeture reposant contre les éléments en forme de plaque, et dans lequel la buse d'injection est disposée dans une des plaques de fermeture, et débouche dans un des évidements du type canal.

fig-1

fig-2

Fig-3